# EUROPEAN PATENT SPECIFICATION

(11) **EP 3 536 144 B1**
(45) Date of publication and mention of the grant of the patent: **26.10.2022**
(21) Application number: 19161291.0
(22) Date of filing: 07.03.2019
(51) Int. Cl.: A01D 75/20, A01D 34/00

(54) **LAWNMOWER WITH ULTRASOUND DETERRENT DEVICE FOR WILD ANIMALS**
RASENMÄHER MIT ULTRASCHALLABSCHRECKUNGSVORRICHTUNG FÜR WILDTIERE
TONDEUSE À GAZON AVEC DISPOSITIF DE DISSUASION À ULTRASONS POUR ANIMAUX SAUVAGES

(30) Priority: 08.03.2018 IT 201800003378
(43) Date of publication of application: 11.09.2019
(73) Proprietor: Stiga S.p.A. in breve anche St. S.p.A., 31033 Castelfranco Veneto (TV) (IT)
(72) Inventor: BERGLUND, Peter, 57341 Tranas (SE); BROVEDANI, Vittorio, 31025 SANTA LUCIA DI PIAVE (TV) (IT); LEVER, Nicola, 38076 CALAVINO - MADRUZZO (IT)
(74) Representative: Mittler, Andrea

(56) References cited:
- WO-A1-95/10933
- WO-A1-2013/125992
- WO-A1-2015/115954
- GB-A- 2 295 304

## Description

The present invention relates to a lawnmower with ultrasound deterrent device for wild animals, in particular a robotic lawnmower.

Robotic lawnmowers are increasingly being used by users in recent years; said lawnmowers bring different benefits to users but also some drawbacks.

One of said drawbacks relates to the protection of wild animals in gardens, which may come into contact with robotic lawnmowers, for example, hedgehogs.

Ultrasound devices for keeping back wild animals, such as the device described in patent DE 102008054322 B4 are known in the background art. The device is equipped with a body in which a piezoelectric transducer for generating ultrasounds is located, which may be activated by an electric control element with signals in the ultrasonic frequency range. The upper wall of the body is structured as a membrane capable of vibrating and is connected to the piezoelectric transducer by means of a junction element, and it may be moved thereby in ultrasonic oscillating movements.

WO 2013/125992 discloses a robotic lawnmower provided with a collision sensor adapted to detect the collision of the lawnmower against an obstacle. The control unit of the lawnmower receives the data from the collision sensor and respond by stopping the robotic lawnmower or by changing the direction of the robotic lawnmower or by sending an alarm.

In view of the background art, it is the object of the present invention to provide a lawnmower equipped with an ultrasound deterrent device for wild animals which is activated only under certain circumstances so as to minimize energy consumption.

In accordance with the present invention, said object is achieved by means of a lawnmower as defined in claim 1.

By virtue of the present invention it is possible to provide a lawnmower equipped with an ultrasound deterrent device for wild animals which allows to keep back wild animals from the garden in which the lawnmower is used only when necessary, minimizing energy consumption. In fact the ultrasound deterrent device is not always activated but only under certain circumstance, that is only when the trajectory of the lawnmower is deviated with respect to the predefined trajectory and only if this deviation, which is angularly measured, is greater than a given angle; in this way the energy consumption of the lawnmower is minimized.

The features and advantages of the present invention will become apparent from the following detailed description of an embodiment thereof, illustrated by way of non-limiting example in the accompanying drawings, in which:
Figure 1 shows a diagrammatic view of a lawnmower with ultrasound deterrent device for wild animals in accordance with the present invention;
Figure 2 shows a block diagram of the control unit of the ultrasound device;
Figure 3 shows a diagrammatic view of a possible path of the lawnmower of Figure 1;
Figure 4 shows a block diagram of the operation of the control unit of Figure 2.

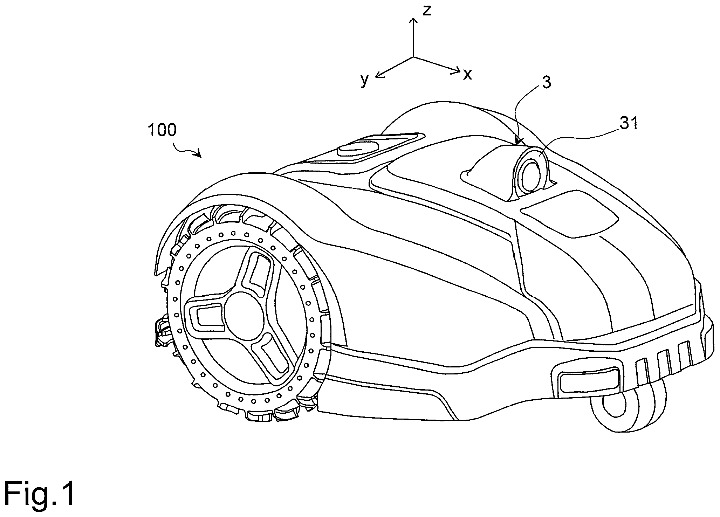

Figures 1-4 show a lawnmower 100, in particular a robotic lawnmower, equipped with an ultrasound deterrent device 3 for wild animals in accordance with present invention.

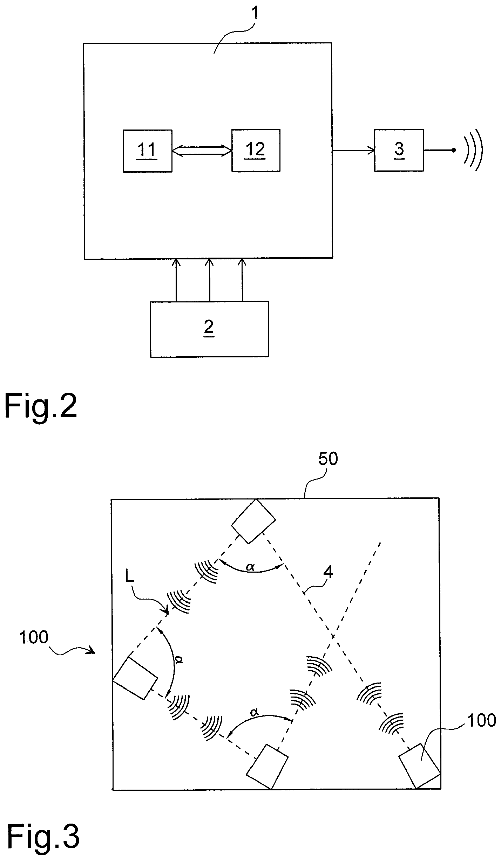

The lawnmower 100 comprises a control unit 1 of the ultrasound deterrent device 3, as better shown in Figure 2; the control unit 1 may be a unit dedicated to the control of the ultrasound deterrent device 3 or it may be part of the unit for controlling the entire lawnmower.

The ultrasound deterrent device 3 preferably comprises a piezoelectric transducer for generating ultrasounds, preferably in a frequency range from 25khz to 45khz, which may be activated by the control unit 1. The device 3 comprises a membrane capable of vibrating and connected to the piezoelectric transducer; the membrane performs ultrasonic oscillating movements. A loudspeaker 31 is provided, with a sound emission beam angle preferably of between 10° and 20°.

The lawnmower 100 also comprises detecting means 2, for example a gyroscope, adapted to detect an angular deviation with respect to the trajectory or path L of the lawnmower which are due to the collision against an obstacle or are set by the control unit 1, particularly said detecting means are configured to detect data on said angular deviation with respect to the trajectory or path L of the lawnmower; the trajectory L is the trajectory which is set by the control unit 1, that is a prefixed path or direction which has been previously set for the lawnmower 100. The control unit 1 is configured to process the angle α of the angular deviation of the trajectory L of the lawnmower from the data received from the detecting means 2 and is configured to activate the device 3 if said angle α is greater than a given angle α₀; the device 3 is preferably activated for a given time period, for example for 1 second If the lawnmower collides with obstacles (such as stones or walls or a perimeter wire 50 or else) in the path or trajectory L thereof, the control unit of the entire lawnmower controls that the path or trajectory of the lawnmower must change or deviate from the previously set path or trajectory L so as to take a new trajectory; if this deviation from the previously set path or trajectory or direction L, which is angularly measured by means of the angle α, that is if the angle α between the new trajectory and the preceding trajectory of the lawnmower results greater than the given angle α₀, the control unit 1 activates the ultrasound deterrent device 3.

In particular, the detecting means 2, for example a gyroscope, send to the control unit 1 the angular speed components ωx, ωy, ωz, i.e., i.e. the components of the rotation speed of the lawnmower on the three Cartesian axis X, Y and Z. when the lawnmower rotates of the angle α by changing from the preceding trajectory to the new trajectory, i.e. the components of the angular speed vector cot of the lawnmower on the three Cartesian axis X, Y and Z.

The control unit 1 is configured to activate the ultrasound deterrent device 3 if the trajectory L of the lawnmower detected by the detecting means 2 is deviated by an angle α greater than a given angle α₀, preferably an angle of between 15° and 45°, still preferably an angle of 30°, as better shown in Figure 3. In particular, the control unit 1 obtains the angle α as a function of the angular speed components ωx, ωy, coz received from the detecting means 2 and verifies if said angle α is greater than a predetermined angle α₀ which is preferably of between 15° and 45°, still preferably α₀=30°. The angular deviation of the lawnmower 100 from the trajectory L thereof may be due to the presence of obstacles in the path thereof, such as stones or walls or a perimeter wire 50 or else.

The control unit 1 comprises processing means 11 and a memory 12 in which an operating software is installed and running, as better shown in Figure 2.

The software is based on an algorithm which is updated at equal time intervals Δt, for example, with a duration of 20 ms. Therefore, the control unit 1 receives, during each time period Δt, the data from the detecting means 2, i.e., the angular speed components ωx, ωy, ωz, and processes them.

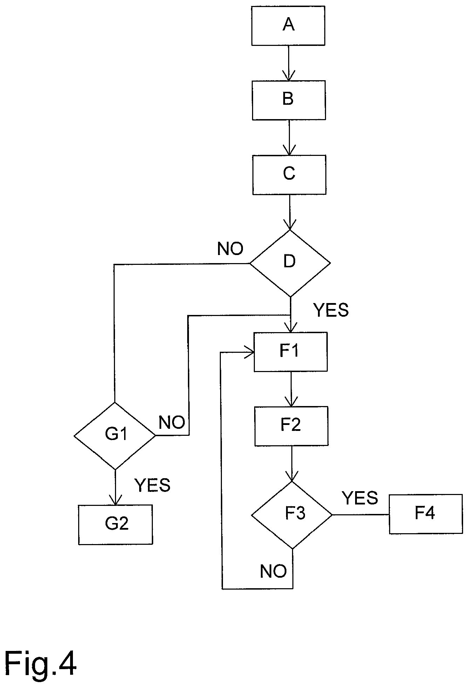

The software comprises the following operational functions or steps, shown in Figure 4.

During step A, it controls the acquisition of the angular speed components ωx, ωy, ωz.

During the next step B, the three angular speed components ωx, ωy, ωz acquired are stored on a buffer, preferably a circular queue with n positions, preferably with n=20, so that the new angular speed components ωx, ωy, ωz occupy in the queue the position of the older angular speed components ωx, ωy, ωz.

In the next step C, the software controls the calculation of the average of the values of the angular speed components ωx, ωy, ωz contained in the n positions of the circular queue, thus obtaining an average angular speed value ω.

In the next step D, the software verifies if the average angular speed ω calculated during step C is greater or lower than a given angular speed ω₀ of, for example, 3°/s.

If the average angular speed ω is greater than ω₀ (indicated with YES in the diagram of Figure 4), step F1 occurs, in which the software calculates the angular variation Δα given by the average angular speed ω for the time period Δt, i.e., Δα= ω×Δt.

Step F1 is followed by the next step F2, in which the value of the measured rotation angle αₖ is updated, becoming equal to the sum of the previously measured angle αₖ₋₁ and the angular variation Δα, i.e., αₖ= αₖ₋₁+Δα.

Step F2 is followed by the next step F3, in which the software verifies if the value of the measured rotation angle αₖ calculated during step F2 is greater or lower than the given value α₀, preferably an angle of between 15° and 45°, still preferably an angle of 30°.

If the value of the measured rotation angle αₖ is greater than α₀ (indicated with YES in the diagram of Figure 4), step F4 occurs and the control unit 1 makes the ultrasound deterrent device 3 emit the ultrasounds with a time delay Tdelay preferably of 1 s and the value of the measured rotation angle αₖ is set equal to zero. If, during the time delay Tdelay, the value of the measured rotation angle αₖ is greater than α₀, the time delay Tdelay will be increased, for example, by 1 s.

If during step F3 the value of the measured rotation angle αₖ is lower than α₀ (indicated with NO in the diagram of Figure 4), step F1 follows.

If the average angular speed ω is lower than ω₀ during step D (indicated with NO in the diagram of Figure 4), the value of the measured rotation angle αₖ is not updated and step G1 occurs in which it is verified whether, for a given period T, for example, of 2 s, the average angular speed ω is always kept lower than ω₀ or not.

If the average angular speed ω is always kept lower than ω₀ (indicated with YES in the diagram of Figure 4), step G2 occurs, in which the value of the measured rotation angle αₖ is set equal to zero. If, instead, the average angular speed ω becomes greater than ω₀ (indicated with NO in the diagram of Figure 4), step F1 follows.

## Claims

1. A lawnmower (100) comprising an ultrasound deterrent device (3) for wild animals, means for controlling (1) said ultrasound deterrent device and detecting means (2) adapted to detect an angular deviation of the lawnmower with respect to the trajectory thereof, **characterized in that** said controlling means are configured to process the angle (α) of the angular deviation from the trajectory (L) of the lawnmower from the data received from said detecting means and are configured to activate said ultrasound deterrent device if said angle (α) is greater than a given angle (α₀) ranging from 15° to 45° .

2. A lawnmower according to claim 1, **characterized in that** said given angle (α₀) is equal to 30°.

3. A lawnmower according to any one of the preceding claims, **characterized in that** said controlling means (1) comprise processing means (11) and a memory (12) in which an operating software is installed, said controlling means being configured to receive (A) the angular speed components (ωx, ωy, ωz) detected by the detecting means, process (B-F) said angular speed components (ωx, ωy, ωz) to obtain said angle, verify (F1-F3) if said angle is greater than said given angle, activate said ultrasound device if said angle is greater than said given angle.

4. A lawnmower according to claim 3, **characterized in that** said controlling means are configured to perform in sequence, for each given time period (Δt), the functions of receiving the angular speed components (ωx, ωy, ωz) detected by the detecting means, of processing said angular speed components (ωx, ωy, ωz) to obtain said angle and of verifying (F1-F3) if said angle is greater than said given angle.

5. A lawnmower according to claim 4, **characterized in that** said controller is further configured to perform the following functions:
- acquiring (A) the angular speed components (ωx, ωy, ωz) detected by the detecting means;
- storing (B) the angular speed components (ωx, ωy, ωz) detected by the detecting means on an n-position buffer, so that the new angular speed components (ωx, ωy, ωz) occupy in the buffer the position of the older angular speed components (ωx, ωy, ωz);
- calculating (C) the average of the values of the angular speed components (ωx, ωy, ωz) contained in the n positions of the buffer, thus obtaining an average angular speed value (ω);
- verifying (D) if the average angular speed (ω), previously obtained, is greater than a given angular speed (ω₀);
- if the verifying function (D) gives a positive outcome, calculating (F1) the angular variation (Δα) given by the average angular speed multiplied by said time period (Δα=ω×Δt);
- updating (F2) the value of the angle (αₖ) which becomes equal to the sum of the previously measured angle (αₖ₋₁) and the angular variation (Δα);
- further verifying (F3) if the updated value of the angle (αₖ) is greater than said given angle (α₀);
- if the further verifying function (F3) gives a positive outcome, activating the ultrasound deterrent device (3) and resetting the value of the angle to zero.

6. A lawnmower according to claim 5, **characterized in that** said function of activating the ultrasound deterrent device (3) occurs with a given time delay (Tdelay).

7. A lawnmower according to claim 6, **characterized in that**, if the value of said given time delay (Tdelay) is greater than said time period, said controller being configured to perform the function of increasing said time delay if during said already set time delay (Tdelay) the value of the angle is greater than said given angle.

8. A lawnmower according to claim 5, **characterized in that**, if the verifying function (D) gives a negative outcome, said controller is configured to perform the function of resetting the value of the angle to zero, if the average angular speed (ω) is always kept lower than said given angular speed (ω₀) for a further time period (T).

## Patentansprüche

1. Rasenmäher (100) mit einer Ultraschall-Abschreckungsvorrichtung (3) für Wildtiere, Einrichtungen zum Steuern (1) der Ultraschall-Abschreckungsvorrichtung und Erfassungseinrichtungen (2), die dazu ausgebildet sind, eine Winkelabweichung des Rasenmähers in Bezug auf seine Bahn zu erfassen, **dadurch gekennzeichnet, dass** die Steuereinrichtungen dazu ausgebildet sind, den Winkel (α) der Winkelabweichung von der Bahn (L) des Rasenmähers aus den von den Erfassungseinrichtungen empfangenen Daten zu verarbeiten, sowie dazu ausgebildet sind, die Ultraschall-Abschreckungsvorrichtung zu aktivieren, wenn der Winkel (α) größer als ein bestimmter Winkel (ao) ist, der im Bereich von 15° bis 45° liegt.

2. Rasenmäher nach Anspruch 1,
**dadurch gekennzeichnet, dass** der bestimmte Winkel (ao) gleich 30° ist.

3. Rasenmäher nach einem der vorhergehenden Ansprüche,
**dadurch gekennzeichnet, dass** die Steuereinrichtungen (1) Verarbeitungseinrichtungen (11) und einen Speicher (12) aufweisen, worin eine Betriebssoftware installiert ist, wobei die Steuereinrichtungen dazu ausgebildet sind, die von den Erfassungseinrichtungen erfassten Winkelgeschwindigkeitskomponenten (ωx, ωy, ωz) zu empfangen (A), die Wnkelgeschwindigkeitskomponenten (ωx, ωy, ωz) zu verarbeiten (B-F), um den Winkel zu erhalten, zu verifizieren (F1-F3), ob der Winkel größer als der bestimmte Winkel ist, und die Ultraschallvorrichtung zu aktivieren, wenn der Winkel größer als der bestimmte Winkel ist.

4. Rasenmäher nach Anspruch 3,
**dadurch gekennzeichnet, dass** die Steuereinrichtungen dazu ausgebildet sind, nacheinander für jede gegebene Zeitspanne (Δt) die Funktionen auszuführen des Empfangens der von den Erfassungseinrichtungen erfassten Winkelgeschwindigkeitskomponenten (ωx, ωy, ωz), des Verarbeitens der Winkelgeschwindigkeitskomponenten (ωx, ωy, ωz), um den Winkel zu erhalten, sowie des Verifizierens (F1-F3), ob der Winkel größer als der bestimmte Winkel ist.

5. Rasenmäher nach Anspruch 4,
**dadurch gekennzeichnet, dass** die Steuerung ferner zum Ausführen der folgenden Funktionen ausgebildet ist:
- Ermitteln (A) der durch die Erfassungseinrichtungen erfassten Winkelgeschwindigkeitskomponenten (ωx, ωy, ωz);
- Speichern (B) der von den Erfassungseinrichtungen erfassten Winkelgeschwindigkeitskomponenten (ωx, ωy, ωz) in einem Puffer mit n Positionen, so dass die neuen Winkelgeschwindigkeitskomponenten (ωx, ωy, ωz) in dem Puffer die Position der älteren Winkelgeschwindigkeitskomponenten (ωx, ωy, ωz) einnehmen;
- Berechnen (C) des Durchschnitts der Werte der Wnkelgeschwindigkeitskomponenten (ωx, ωy, ωz), die in den n Positionen des Puffers enthalten sind, wodurch ein durchschnittlicher Winkelgeschwindigkeitswert (ω) erhalten wird;
- Verifizieren (D), ob die zuvor erhaltene durchschnittliche Winkelgeschwindigkeit (ω) größer als eine bestimmte Winkelgeschwindigkeit (ω₀) ist;
- wenn die Verifizierungsfunktion (D) ein positives Ergebnis ergibt, Berechnen (F1) der Winkeländerung (Δα), die durch die durchschnittliche Winkelgeschwindigkeit multipliziert mit der Zeitdauer gegeben ist (Δα = ω × Δt);
- Aktualisieren (F2) des Werts des Winkels (αₖ), der gleich der Summe des zuvor gemessenen Winkels (αₖ₋₁) und der Winkeländerung (Δα) wird;
- weiteres Verifizieren (F3), ob der aktualisierte Wert des Winkels (αₖ) größer als der bestimmte Winkel (α₀) ist;
- wenn die weitere Verifizierungsfunktion (F3) ein positives Ergebnis ergibt, Aktivieren der Ultraschall-Abschreckungsvorrichtung (3) und Zurücksetzen des Werts des Winkels auf Null.

6. Rasenmäher nach Anspruch 5,
**dadurch gekennzeichnet, dass** die Funktion des Aktivierens der Ultraschall-Abschreckungsvorrichtung (3) mit einer bestimmten Zeitverzögerung (Tdelay) stattfindet.

7. Rasenmäher nach Anspruch 6,
**dadurch gekennzeichnet, dass** dann, wenn der Wert der bestimmten Zeitverzögerung (Tdelay) größer als die Zeitdauer ist, die Steuerung dazu ausgebildet ist, die Funktion des Erhöhens der Zeitverzögerung auszuführen, wenn während der bereits vorgegebenen Zeitverzögerung (Tdelay) der Wert des Winkels größer als der bestimmte Winkel ist.

8. Rasenmäher nach Anspruch 5,
**dadurch gekennzeichnet, dass** dann, wenn die Verifizierungsfunktion (D) ein negatives Ergebnis ergibt, die Steuerung dazu ausgebildet ist, die Funktion des Rücksetzens des Werts des Winkels auf Null auszuführen, wenn die durchschnittliche Winkelgeschwindigkeit (ω) immer niedriger gehalten wird als die bestimmte Winkelgeschwindigkeit (ω₀) für eine weitere Zeitdauer (T).

## Revendications

1. Tondeuse à gazon (100) comprenant un dispositif effaroucheur à ultrasons (3) d'animaux sauvages, des moyens de commande (1) dudit dispositif effaroucheur à ultrasons et des moyens de détection (2) adaptés pour détecter une déviation angulaire de la tondeuse à gazon par rapport à sa trajectoire, **caractérisée en ce que** lesdits moyens de commande sont configurés pour traiter l'angle (α) de la déviation angulaire par rapport à la trajectoire (L) de la tondeuse à gazon à partir des données reçues desdits moyens de détection, et sont configurés pour activer ledit dispositif effaroucheur à ultrasons si ledit angle (α) est supérieur à un angle (α₀) donné allant de 15° à 45°.

2. Tondeuse à gazon selon la revendication 1, **caractérisée en ce que** ledit angle (α₀) donné est égal à 30°.

3. Tondeuse à gazon selon l'une quelconque des revendications précédentes, **caractérisée en ce que** lesdits moyens de commande (1) comprennent des moyens de traitement (11) et une mémoire (12) dans laquelle un logiciel d'exploitation est installé, lesdits moyens de commande étant configurés pour recevoir (A) les composantes de vitesse angulaire (ωx, ωy, ωz) détectées par les moyens de détection, traiter (B-F) lesdites composantes de vitesse angulaire (ωx, ωy, ωz) pour obtenir ledit angle, vérifier (F1-F3) si ledit angle est supérieur audit angle donné, activer ledit dispositif à ultrasons si ledit angle est supérieur audit angle donné.

4. Tondeuse à gazon selon la revendication 3, **caractérisée en ce que** lesdits moyens de commande sont configurés pour réaliser en séquence, pendant chaque période de temps (Δt) donnée, les fonctions de réception des composantes de vitesse angulaire (ωx, ωy, ωz) détectées par les moyens de détection, de traitement desdites composantes de vitesse angulaire (ωx, ωy, ωz) pour obtenir ledit angle et de vérification (F1-F3) précisant si ledit angle est supérieur audit angle donné.

5. Tondeuse à gazon selon la revendication 4, **caractérisée en ce que** ledit dispositif de commande est en outre configuré pour réaliser les fonctions suivantes :
- acquérir (A) les composantes de vitesse angulaire (ωx, ωy, ωz) détectées par les moyens de détection ;
- stocker (B) les composantes de vitesse angulaire (ωx, ωy, ωz) détectées par les moyens de détection sur un tampon à n positions, de sorte que les nouvelles composantes de vitesse angulaire (ωx, ωy, ωz) occupent dans le tampon la position des anciennes composantes de vitesse angulaire (ωx, ωy, ωz) ;
- calculer (C) la moyenne des valeurs des composantes de vitesse angulaire (ωx, ωy, ωz) contenues dans les n positions du tampon, obtenant ainsi une valeur de vitesse angulaire moyenne (ω) ;
- vérifier (D) si la vitesse angulaire moyenne (ω) précédemment obtenue est supérieure à une vitesse angulaire (ω₀) donnée ;
- si la fonction de vérification (D) donne un résultat positif, calculer (F1) la variation angulaire (Δα) donnée par la vitesse angulaire moyenne multipliée par ladite période de temps (Δα = ω × Δt) ;
- mettre à jour (F2) la valeur de l'angle (αₖ) qui devient égale à la somme de l'angle précédemment mesuré (αₖ₋₁) et de la variation angulaire (Δα) ;
- vérifier en outre (F3) si la valeur mise à jour de l'angle (αₖ) est supérieure audit angle (α₀) donné ;
- si la fonction de vérification supplémentaire (F3) donne un résultat positif, activer le dispositif effaroucheur à ultrasons (3) et réinitialiser la valeur de l'angle à zéro.

6. Tondeuse à gazon selon la revendication 5, **caractérisée en ce que** ladite fonction d'activation du dispositif effaroucheur à ultrasons (3) se produit avec une temporisation (Tdelay) donnée.

7. Tondeuse à gazon selon la revendication 6, **caractérisée en ce que**, si la valeur de ladite temporisation (Tdelay) donnée est supérieure à ladite période de temps, ledit dispositif de commande est configuré pour réaliser la fonction d'augmentation de ladite temporisation si pendant ladite temporisation (Tdelay) déjà établie la valeur de l'angle est supérieure audit angle donné.

8. Tondeuse à gazon selon la revendication 5, **caractérisée en ce que**, si la fonction de vérification (D) donne un résultat négatif, ledit dispositif de commande est configuré pour réaliser la fonction de réinitialisation de la valeur de l'angle à zéro si la vitesse angulaire moyenne (ω) est toujours maintenue inférieure à ladite vitesse angulaire (ω₀) donnée pendant une période de temps (T) supplémentaire.
